# EUROPÄISCHE PATENTSCHRIFT

(11) **EP 3 898 010 B1**
(45) Veröffentlichungstag und Bekanntmachung des Hinweises auf die Patenterteilung: **19.04.2023**
(21) Anmeldenummer: 19827670.1
(22) Anmeldetag: 12.12.2019
(51) Int. Cl.: B06B 3/00, B23K 20/10

(54) **ULTRASCHALLSCHWEISSANLAGE MIT EINER WINKELPOSITIONIERUNGSVORRICHTUNG**
ULTRASONIC WELDING SYSTEM WITH AN ANGULAR POSITIONG DEVICE
SYSTÈME DE SOUDAGE PAR ULTRASONS AVEC UN DISPOSITIF DE POSITION ANGULAIRE

(30) Priorität: 19.12.2018 DE 102018132837
(43) Veröffentlichungstag der Anmeldung: 27.10.2021
(73) Patentinhaber: Herrmann Ultraschalltechnik GmbH & Co. KG, 76307 Karlsbad (DE)
(72) Erfinder: MANCINI, Raffaele, 76189 Karlsruhe (DE); ZENDLER, Stefan, 75334 Straubenhardt (DE); VOGLER, Ulrich, 88690 Uhldingen-Mühlhofen (DE); POHL, Johannes, 76275 Ettlingen (DE)
(74) Vertreter: WSL Patentanwälte Partnerschaft mbB
(86) Internationale Anmeldenummer: PCT/EP2019/084922
(87) Internationale Veröffentlichungsnummer: WO 2020/126831

(56) Entgegenhaltungen:
- EP-A1- 2 267 765
- DE-A1-102010 049 571
- DE-A1-102013 103 887
- DE-A1-102015 110 576
- DE-T2- 69 515 921
- DE-T5-112016 003 596

## Beschreibung

Die vorliegende Erfindung betrifft eine Ultraschallschweißanlage mit einer Ultraschallschwingeinheit, die eine Sonotrode und einen Konverter aufweist, gemäß Anspruch 1.

Die Sonotrode und der Konverter sind entlang einer Längsachse nebeneinander angeordnet und derart aufeinander abgestimmt, dass die Ultraschallschwingeinheit mit einer Ultraschallschwingung in Richtung der Längsachse mit einer Frequenz f = v/ λ in Resonanz gebracht werden kann, wobei v die Ausbreitungsrichtung der akustischen Ultraschallschwingung innerhalb der Ultraschallschwingeinheit und λ die Wellenlänge der Ultraschallschwingung ist. In diesem Fall bildet sich in der Ultraschallschwingeinheit eine stehende Welle mit Schwingungsknoten und Schwingungsmaxima aus. Im einfachsten Fall zeigt die Sonotrode genau einen Schwingungsknoten und zwei Schwingungsmaxima, d.h. die Sonotrode hat eine Länge, die der halben Wellenlänge λ/2 der Resonanzschwingung entspricht.

In der Regel weist die Ultraschallschweißanlage einen Amboss auf, wobei das zu bearbeitende Material zwischen der Siegelfläche der Sonotrode und der Siegelfläche des Amboss angeordnet wird.

Für die Bearbeitung muss die Ultraschallschwingeinheit gehalten werden und weist daher eine entsprechende Halterung auf.

Aus der EP 2 267 765 A1 ist beispielsweise eine Stützvorrichtung für einen Resonator bekannt, die den Resonator an einer beliebigen Stelle abstützen kann, den Resonator mit einer bestimmten Schwingung konsistent schwingen lässt und eine Ultraschallschwingung effizient auf Objekte übertragen kann.

DE 10 2015 110576 A1 offenbart ein Ultraschallschwingsystem, welches über ein Werkzeugspannsystem mit einer Platte verbunden ist, die Teil einer Versteileinrichtung ist.

Weitere Haltestrukturen für Ultraschallschweißvorrichtungen werden beispielsweise auch in der DE 11 2016 003 596 T5 und der DE102013103887 A1 beschrieben.

Die Anforderungen an die Schweißqualität nehmen immer weiter zu. Darüber hinaus gibt es Materialien, wie z.B. Metalle, bei deren schweißender Bearbeitung es zu einem erheblichen Verschleiß an den Siegelflächen der Sonotrode kommt, wodurch es notwendig wird, die Sonotrode häufig auszutauschen. Vereinzelt sind bereits Wendesonotroden mit mehreren Siegelflächen vorgeschlagen worden, bei denen die Sonotrode nachdem eine Siegelfläche verschlissen worden ist, gedreht werden kann, um mit einer anderen Siegelfläche weiter zu arbeiten.

Um insbesondere beim Metallschweißen eine hohe Schweißqualität zu erzielen, ist es notwendig, die Siegelflächen der Sonotrode und des Ambosses sehr exakt parallel zueinander zu positionieren. Insbesondere die parallele Positionierung der Ultraschallschwingeinheit bzw. der Siegelfläche der Sonotrode relativ zum Amboss ist bei den bekannten Ultraschallschweißanlagen sehr aufwendig und kann häufig nur von speziell geschultem Personal durchgeführt werden, was insbesondere bei häufigem Austausch der Sonotrode zu störenden Unterbrechungen des Bearbeitungsprozesses führt. Daran ändert auch die Verwendung von Wendesonotroden nichts, da die Sonotrode nach jedem Wenden erneut exakt parallel zum Amboss positioniert werden muss.

Es ist daher Aufgabe der vorliegenden Erfindung, eine Ultraschallschweißanlage bereitzustellen, die eine einfache und schnelle hochpräzise Justierung der Siegelflächen der Sonotrode relativ zum Amboss erlaubt.

Erfindungsgemäß wird diese Aufgabe dadurch gelöst, dass die Halterung eine Winkelpositionierungsvorrichtung aufweist, wobei die Winkelpositionierungsvorrichtung und die Ultraschallschwingeinheit derart ausgebildet sind, dass sie formschlüssig miteinander verbindbar sind, sodass eine Drehung der Ultraschallschwingeinheit um die Längsachse durch die formschlüssige Verbindung verhindert wird und eine Relativbewegung zwischen der Ultraschallschwingeinheit und der Halterung in Richtung der Längsachse nicht verhindert wird.

Durch diese formschlüssige Verbindung wird die Winkelposition der Ultraschallschwingeinheit in Bezug auf ihre Längsachse festgelegt. Die Ultraschallschwingeinheit muss lediglich mit der Winkelpositionierungsvorrichtung verbunden werden, um die Drehposition festzulegen. Danach kann eine Positionierung der Ultraschallschwingeinheit zumindest in begrenztem Umfang in Richtung der Längsachse vorgenommen werden. Ein weiteres Drehen um die Längsachse wird durch die formschlüssige Verbindung verhindert. Die formschlüssige Verbindung ist dabei derart ausgebildet, dass die Winkelposition in Bezug auf die Längsachse bei in Eingriff treten der formschlüssigen Verbindung in der gewünschten Position ist. Eine weitere Justierung in der Drehrichtung ist nicht notwendig. Die Ultraschallschwingeinheit muss somit nur mit der Winkelpositionierungsvorrichtung verbunden werden, um eine nahezu perfekt parallele Ausrichtung der Siegelflächen von Amboss und Sonotrode zu verwirklichen.

Erfindungsgemäß weist die Ultraschallschwingeinheit weiter einen Außenwulst mit mindestens einer Ausnehmung auf, wobei die Winkelpositionierungsvorrichtung mindestens einen zu der Ausnehmung korrespondierenden Vorsprung aufweist, der in die Ausnehmung eingreifen kann und somit die formschlüssige Verbindung verwirklicht.

Dabei kann der Außenwulst mehrere Ausnehmungen aufweisen, wobei vorzugsweise die Winkelpositionierungsvorrichtung mehrere zu den mehreren Ausnehmungen korrespondierende Vorsprünge aufweist, wobei besonders bevorzugt die Ultraschallschwingeinheit in mehreren relativ zueinander um die Längsachse gedrehten Positionen mit der Winkelpositionierungsvorrichtung formschlüssig verbunden werden kann.

Insbesondere dann, wenn die Sonotrode als Wendesonotrode mit mehreren Siegelflächen ausgebildet ist, ist letztere Ausführungsform von Vorteil. In jeder Position, in welcher die formschlüssige Verbindung eine Relativdrehung zwischen Winkelpositionierungsvorrichtung und Ultraschallschwingeinheit verhindert, ist die Ultraschallschwingeinheit in einer Drehposition, in welcher eine der mehreren Siegelflächen optimal ausgerichtet ist.

Der Außenwulst kann beliebig ausgebildet sein. Beispielsweise kann der Außenwulst einen T-förmigen Querschnitt aufweisen. Der Außenwulst weist dann einen Steg und einen sich beidseitig im rechten Winkel von einer Seite des Stegs erstreckenden Flansch auf. Die Ausnehmung oder die Ausnehmungen können dann vorzugsweise im Flansch vorgesehen sein.

Der zumindest eine Vorsprung der Winkelpositionierungsvorrichtung kann sich prinzipiell in jeder Richtung erstrecken, soweit er in der Lage ist, eine formschlüssige Verbindung mit der Ultraschallschwingeinheit bereitzustellen. In einer bevorzugten Ausführungsform erstreckt sich der Vorsprung der Winkelpositionierungsvorrichtung in axialer Richtung.

In einer weiteren bevorzugten Ausführungsform weisen die mindestens eine Ausnehmung des Au-βenwulstes sowie der Vorsprung der Winkelpositionierungsvorrichtung zueinander korrespondierende Kontaktflächen auf, die bei in die Winkelpositionierungsvorrichtung eingesetzter Ultraschallschwingeinheit bei einer Drehung der Ultraschallschwingeinheit um die Längsachse miteinander in Kontakt treten, wobei vorzugsweise die Kontaktflächen der Ausnehmung und/oder des Vorsprungs gegenüber der Längsachse geneigt sind. Im Grunde genommen stellt diese Ausführungsform eine Verzahnung zwischen Winkelpositionierungsvorrichtung einerseits und Ultraschallschwingeinheit andererseits dar.

Um die formschlüssige Verbindung möglichst spielfrei zu gestalten, ist in einer bevorzugten Ausführungsform vorgesehen, dass die Vorsprünge und oder Ausnehmungen spitz zulaufend ausgebildet sind mit der Folge, dass die Kontaktflächen gegenüber der Längsachse geneigt sind. Beispielsweise können die Vorsprünge und Ausnehmungen als Hirth-Verzahnung ausgeführt sein.

In einer weiteren bevorzugten Ausführungsform weist die Winkelpositionierungsvorrichtung ein Befestigungselement zum Befestigen der Winkelpositionierungsvorrichtung an einem Maschinenständer und ein Kopplungselement auf, welches in Richtung der Längsachse relativ zum Befestigungselement zwischen zwei Positionen hin und her bewegbar ist, wobei die formschlüssige Verbindung zwischen Kopplungselement und Ultraschallschwingeinheit hergestellt werden kann. Dabei kann das Kopplungselement in eine der Positionen elastisch vorgespannt sein.

Durch die Zweiteiligkeit der Winkelpositionierungsvorrichtung kann das Kopplungselement mit der Ultraschallschwingeinheit eine formschlüssige Verbindung eingehen oder außer Eingriff bewegt werden, um ein Drehen der Ultraschallschwingeinheit um ihre Längsachse zu ermöglichen.

In einer weiteren bevorzugten Ausführungsform ist zwischen Befestigungselement und Kopplungselement eine Druckplatte vorgesehen, wobei das Kopplungselement um die Längsachse relativ zur Druckplatte drehbar ist. Des Weiteren ist eine Arretiervorrichtung vorgesehen, mit welcher das Kopplungselement derart arretiert werden kann, dass eine Drehung des Kopplungselementes um die Längsachse der Ultraschallschwingeinheit verhindert wird. In einer bevorzugten Ausführungsform ist die Arretiervorrichtung an der Halterung befestigt.

Es kann eine Feinjustierungsvorrichtung vorgesehen sein, mit welcher das Kopplungselement relativ zum Befestigungselement um die Längsachse zwischen zwei Drehpositionen hin und her gedreht werden kann, wobei besonders bevorzugt die Feinjustiervorrichtung aus einem mit dem Kopplungselement verbindbaren Justierelement mit Langloch sowie einer durch das Langloch greifenden Schraube besteht, welche in eine Gewindebohrung der Halterung greift.

Die Drehbarkeit des Kopplungselementes relativ zum Befestigungselement dient dazu, eventuell noch bestehend Abweichungen von der Parallelität der Siegelfläche der Sonotrode und der Siegelfläche des Amboss auszugleichen. Dies kann mit Hilfe der Feinjustiervorrichtung extrem genau erfolgen.

In einer weiteren bevorzugten Ausführungsform ist der Außenwulst an der Sonotrode oder einem zwischen Sonotrode und Konverter angeordneten Amplitudentransformator angeordnet, wobei vorzugsweise der Wulst in einem Schwingungsknoten der Resonanzschwingung mit der Wellenlänge λ/2 angeordnet ist. Die Anordnung im Schwingungsknoten stellt sicher, dass die Beeinflussung der Resonanzschwingung durch die Halterung bzw. die Winkelpositionierungsvorrichtung minimal ist. Ist der Außenwulst mit T-förmigem Querschnitt mit einem Steg und einem sich beidseitig im rechten Winkel von einer Seite des Stegs erstreckenden Flansch ausgebildet, so sollte dann der Steg im Schwingungsknoten der Resonanzschwingung angeordnet sein.

In einer weiteren bevorzugten Ausführungsform ist ein Abstützelement zum Abstützen einer senkrecht zur Längsachse auf die Sonotrode aufgebrachten Kraft vorgesehen, wobei Sonotrode und Abstützelement zueinander korrespondierende Abstützflächen aufweisen, die zumindest dann, wenn eine Kraft senkrecht zur Längsachse auf die Sonotrode ausgeübt wird, miteinander in Kontakt treten, wobei die Abstützflächen derart ausgebildet sind, dass sie, wenn sie miteinander in Kontakt stehen eine Relativbewegung der Sonotrode gegenüber dem Abstützelement in Richtung der Längsachse verhindern und eine Drehung der Sonotrode um die Längsachse nicht behindert.

Diese Ausführungsform ist insbesondere dann von Vorteil, wenn der Außenwulst für die Winkelpositionierungsvorrichtung an dem Amplitudentransformator angeordnet ist, da dann die während des Schweißens auf die Sonotrode ausgeübte Kraft eine große Hebelwirkung aufweist, die mit Hilfe des Abstützelementes aufgefangen werden kann. Selbst wenn die Siegelflächen von Sonotrode und Amboss exakt parallel zueinander ausgerichtet sind, ändert sich dies, wenn die Sonotrode quer zur Längsachse mit einem Biegemoment belastet wird. Dies ist immer dann der Fall, wenn die Siegelfläche der Sonotrode nicht senkrecht zur Längsachse positioniert ist. Insbesondere beim Metallschweißen ist die Siegelfläche der Sonotrode meist derart orientiert, dass eine Normale auf der Siegelfläche einen rechten Winkel mit der Längsachse einschließt. Da beim Metallschweißen auch relativ hohe Kräfte ausgeübt werden müssen, kommt es zu einer Durchbiegung der Ultraschallschwingeinheit mit der Folge, dass die Siegelfläche der Sonotrode nicht mehr exakt parallel zur Siegelfläche des Amboss ausgerichtet ist, wodurch die Schweißqualität herab gesetzt wird. Zusätzlich können durch große Biegemomente auch die Komponenten der Ultraschallschwingeinheit beschädigt werden, was es zu vermeiden gilt. Durch das Abstützelement wird die Durchbiegung und damit die Abweichung von der Parallelität reduziert und eine Beschädigung von Komponenten der Halterung oder der Ultraschallschwingeinheit vermieden.

Beispielsweise kann die Sonotrode eine Rippe und das Abstützelement eine Nut aufweisen, die zum Abstützen ineinander greifen. Alternativ kann die Sonotrode auch die Nut und das Abstützelement die Rippe aufweisen. Rippe und Nut haben dann korrespondierende Abstützflächen. Vorzugsweise ist der Wulst oder die Nut der Sonotrode in einem Schwingungsknoten der Resonanzschwingung angeordnet.

In einer bevorzugten Ausführungsform sind die korrespondierenden Abstützflächen gegenüber einer Ebene senkrecht zur Längsachse geneigt. In einer besonders bevorzugten Ausführungsform haben sowohl die Nut als auch die Rippe einen trapezförmigen Querschnitt. Durch diese Maßnahme ist die axiale Positionierung der Ultraschallschwingeinheit sehr einfach und exakt.

In einer weiteren bevorzugten Ausführungsform ist ein Gegenwerkzeug vorgesehen, wobei Sonotrode und Gegenwerkzeug in einer Richtung senkrecht zur Längsachse relativ zueinander bewegbar sind und das Abstützelement derart positioniert ist, dass eine von dem Gegenwerkzeug eventuell über ein zwischen Sonotrode und Gegenwerkzeug positioniertes Material auf die Sonotrode ausgeübte Kraft auf das Abstützelement übertragen wird. Im Grunde genommen sind somit Gegenwerkzeug und Abstützelement auf gegenüberliegenden Seiten der Sonotrode positioniert.

In einer weiteren Ausführungsform ist das Abstützelement an der Halterung befestigt, wobei vorzugsweise das Abstützelement relativ zur Halterung zwischen einer Halteposition und einer Freigabeposition hin und her bewegt werden kann. In der Halteposition sind die korrespondieren Kontaktflächen miteinander in Kontakt, während in der Freigabeposition die Ultraschallschwingeinheit in Richtung der Längsachse bewegt werden kann, ohne dass diese Bewegung von dem Abstützelement behindert wird. In einer besonders bevorzugten Ausführungsform ist eine Verriegelungsvorrichtung vorgesehen, mit der das Abstützelement in der Halteposition verriegelt werden kann. In einer weiteren bevorzugten Ausführungsform ist zwischen Sonotrode und Konverter ein Amplitudentransformator vorgesehen, wobei der Amplitudentransformator mit dem Konverter und/oder der Sonotrode über eine formschlüssige Verbindung verbunden sind, die einen Formschluss in allen Richtungen der zur Längsachse senkrechten Ebenen bereitstellt. Beispielsweise kann die formschlüssige Verbindung zwischen Amplitudentransformator und Konverter oder zwischen Amplitudentransformator und Sonotrode aus einem Zapfen und einer korrespondierenden Aussparung bestehen, wobei vorzugsweise der Zapfen an dem Amplitudentransformator und die korrespondierende Aussparung an der Sonotrode oder dem Konverter angeordnet sind.

Der Zapfen und die korrespondierende Aussparung sind vorzugsweise nicht rotationssymmetrisch zur Längsachse ausgebildet, sodass eine Drehpositionierung der Sonotrode gegenüber dem Amplitudentransformator oder dem Konverter gegenüber dem Amplitudentransformator durch die formschlüssige Verbindung erfolgt. Alternativ können auch mehrere Zapfen und hierzu korrespondierende Aussparungen vorgesehen sein. Dabei sollte der Zapfen oder die Zapfen derart ausgebildet sein, dass der Amplitudentransformator nur in definierten Drehwinkelpositionen mit der Sonotrode oder dem Konverter in Eingriff gebracht werden kann.

Dabei haben in einer besonders bevorzugten Ausführungsform der Zapfen und die korrespondierende Aussparung eine Drehsymmetrie um die Längsachse mit einer n-zähligen Drehachse. Ist die Sonotrode als Wendesonotrode drehsymmetrisch um die Längsachse mit einer m-zähligen Drehachse ausgebildet, so ist vorzugsweise m = n. Mit anderen Worten kann der Amplitudentransformator nur in n definierten Drehwinkelpositionen mit der Sonotrode oder dem Konverter in Eingriff gebracht werden.

Diese formschlüssige Verbindung erlaubt in der Regel eine axiale Bewegbarkeit zwischen Amplitudentransformator einerseits und Sonotrode oder Konverter andererseits. Um die Elemente fest miteinander zu verbinden, kann beispielsweise der Amplitudentransformator eine Gewindebohrung und die Sonotrode oder der Konverter eine Durchgangsstufenbohrung aufweisen, so dass mit einer die Durchgangsbohrung durchgreifenden Schraube, welche in die Gewindebohrung eingreift, eine axiale Befestigung erfolgen kann.

Alternativ könnte die Aussparung auch auf den Zapfen aufgeschrumpft werden.

In einer weiteren bevorzugten Ausführungsform ist vorgesehen, dass Zapfen und korrespondierende Aussparung konusförmig ausgebildet sind oder einen konusförmigen Abschnitt aufweisen. Die Konusform dient einerseits zum Zentrieren der Verbindung zwischen Sonotrode und Amplitudentransformator oder der Verbindung zwischen Amplitudentransformator und Konverter. Andererseits kann die Verbindung über die Konusform selbsthemmend ausgeführt sein. Daher ist ein Konuswinkel von maximal 2° von Vorteil.

Nach einer weiteren bevorzugten Ausführungsform ist eine Halterung mit einer Klemmvorrichtung vorgesehen, welche zwischen einer geöffneten Position und einer geschlossenen Position hin und her bewegt werden kann. Dabei kann die Ultraschallschwingeinheit in der geöffneten Position aus der Halterung entnommen werden. In der geschlossenen Position tritt die Klemmvorrichtung an zumindest zwei Haltepunkten mit der Ultraschallschwingeinheit in Kontakt und übt eine Kraft auf diese aus, sodass die Ultraschallschwingeinheit gehalten wird.

Dabei sind die Haltepunkte vorzugsweise auf dem Außenwulst angeordnet.

In einer besonders bevorzugten Ausführungsform ist die Klemmvorrichtung als Spannhülse mit Schlitz ausgebildet. Dabei hat die Spannhülse eine Innenfläche, die korrespondierend zu der Außenfläche eines Abschnittes der Ultraschallschwingeinheit ausgebildet ist. Der Schlitz verbindet die Außenfläche der Hülse mit der Innenfläche der Hülse, so dass die Hülse zwei gegenüberliegende Schlitzwände aufweist, die den Schlitz begrenzen. Eine Spannvorrichtung ist vorgesehen, mit welcher die Schlitzwände aufeinander zu bewegt werden können, wodurch der von der Innenfläche umgrenzte Raum reduziert und die Ultraschallschwingeinheit innerhalb der Hülse geklemmt wird.

Beispielsweise kann in eine Schlitzwand eine Gewindebohrung und in die andere Schlitzwand eine Durchgangsstufenbohrung eingebracht werden, so dass eine als Spannvorrichtung dienende Schraube durch die Durchgangsstufenbohrung in die Gewindebohrung eingreifen kann und beim Drehen der Schraube die beiden Schlitzwände aufeinander zubewegt werden können.

Um eine Beschädigung der Ultraschallschwingeinheit durch die Klemmvorrichtung zu verhindern ist in einer bevorzugten Ausführungsform vorgesehen, dass die Schlitzwände als Anschlagsflächen dienen. Daher sind ein Abschnitt der Außenfläche der Ultraschallschwingeinheit und die Innenfläche der Spannhülse derart aufeinander abgestimmt, dass dann, wenn die Schlitzwände sich berühren, die Ultraschallschwingeinheit sicher von der Klemmvorrichtung gehalten, ohne dass es zu einer Beschädigung der Ultraschallschwingeinheit kommt.

Weitere Vorteile, Merkmale und Anwendungsmöglichkeiten werden deutlich anhand der folgenden Beschreibung einer bevorzugten Ausführungsform der Erfindung und der zugehörigen Figuren. Es zeigen:
Figur 1 eine Draufsicht auf eine erfindungsgemäße Ultraschallschweißanlage,
Figur 2 eine perspektivische Ansicht auf die Ultraschallschweißanlage gemäß Figur 1 ohne Halter,
Figur 3 eine perspektivische Ansicht auf den Halter von Figur 1 ohne Schwinggebilde,
Figuren 4a, 4b, 4c, 4d eine perspektivische Ansicht des Kopplungselementes, des Winkelpositionierelementes von Figur 1 sowie eine Schnittansicht des Winkelpositionierungselementes und der Halterung,
Figur 5 eine Schnittansicht durch die Ausführungsform von Figur 1,
Figur 6 eine perspektivische Ansicht auf den Amplitudentransformator von Figur 1 und
Figur 7 eine perspektivische Ansicht auf die Sonotrode von Figur 1.

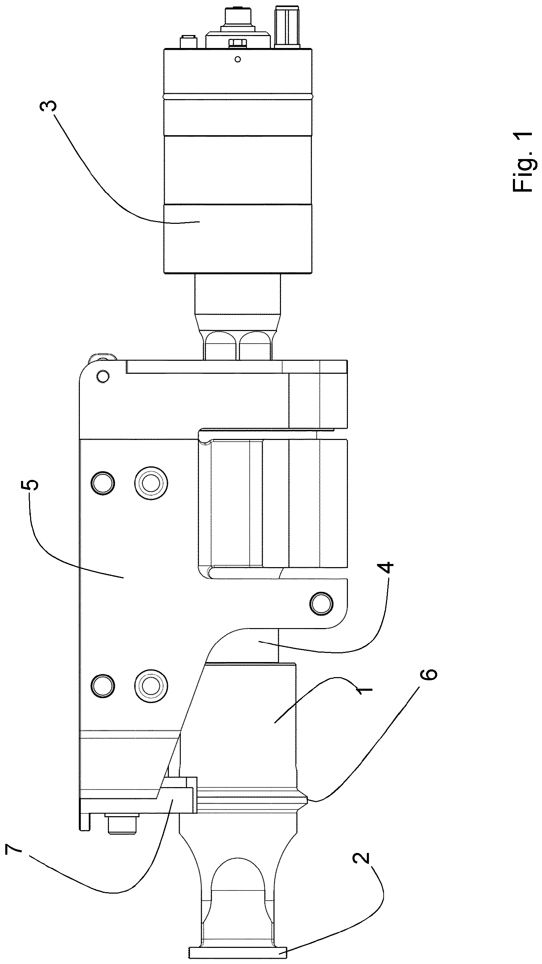

In Figur 1 ist eine erste Ausführungsform der erfindungsgemäßen Ultraschallschweißanlage gezeigt. Diese Ultraschallschweißanlage ist speziell für das Schweißen von Metall vorgesehen. Sie weist eine Ultraschallschwingeinheit auf, die eine Sonotrode 1, ein Amplitudentransformator 4 und einen Konverter 3 beinhaltet. Die Elemente der Ultraschallschwingeinheit sind entlang einer Längsachse nebeneinander angeordnet. Mit Hilfe des Konverters 3 wird eine elektrische Wechselspannung in eine mechanische Ultraschallschwingung umgewandelt. Diese mechanische Schwingung wird mit Hilfe des Amplitudentransformators 4 in ihrer Amplitude, nicht jedoch in ihrer Frequenz, verändert und auf die Sonotrode 1 übertragen. Auf der dem Konverter 3 gegenüberliegenden Seite der Sonotrode 1 weist diese insgesamt vier Siegelflächen 2 auf, die dafür vorgesehen sind, mit dem zu bearbeitenden Material in Kontakt zu treten. Die Ultraschallschwingeinheit ist mit ihren Einzelelementen, d.h. dem Konverter 3, dem Amplitudentransformator 4 und der Sonotrode 1 derart aufeinander abgestimmt, dass sie mit einer Ultraschallfrequenz der Wellenlänge in Resonanz versetzt werden kann. Innerhalb der Sonotrode bildet sich dann eine stehende Longitudinalhalbwelle aus. Die Ultraschallschwingeinheit muss in einem Maschinenständer gehalten werden. Dafür ist der Halter 5 vorgesehen, der weiter unten im Detail erläutert wird.

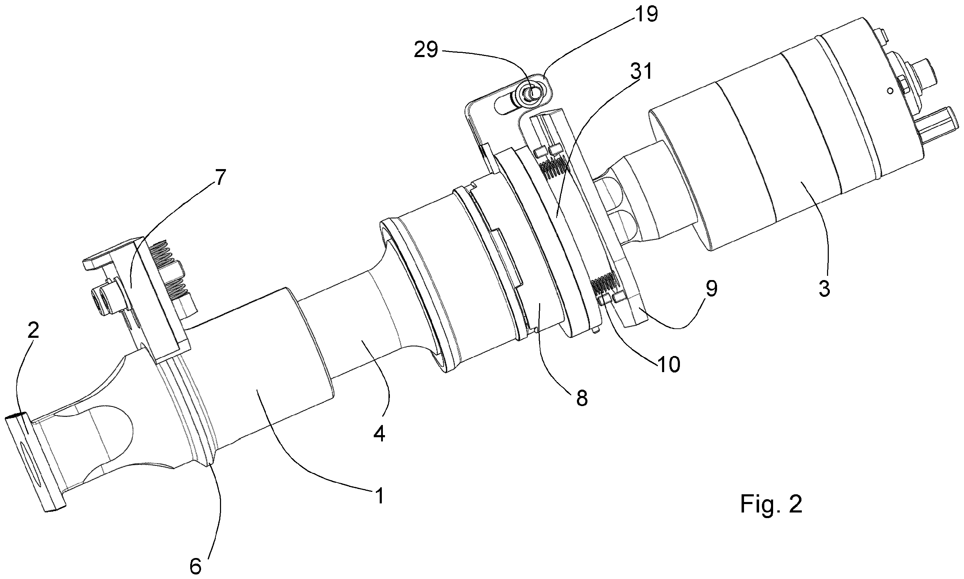

Figur 2 zeigt eine perspektivische Ansicht der Ausführungsform von Figur 1. Man erkennt hier, dass die Einzelteile der Ultraschallschwingeinheit, nämlich der Konverter 3, der Amplitudentransformator 4 und die Sonotrode 1 im Wesentlichen rotationssymmetrisch sind, wobei lediglich das dem Konverter 3 abgewandte Ende der Sonotrode 1 quadratisch ausgebildet ist und an jeder Kantenfläche des quadratischen Querschnittes eine Schweißfläche 2 vorgesehen ist. Alternativ könnte die Sonotrode auch andere Querschnitte, wie z.B. dreieckig, rechteckig aber nicht quadratisch, usw. aufweisen.

Insbesondere beim Schweißen von Metallen und zwar insbesondere von Nichteisenmetallen, wie z.B. Kupfer oder Aluminium, mittels Ultraschall kommt es zu einer erheblichen Abnutzung der Schweißfläche, sodass die Ultraschallschweißanlage teilweise oder vollständig in regelmäßigen Abständen ausgetauscht werden muss.

Da die gezeigte Sonotrode 1 insgesamt vier Siegelflächen 2 aufweist, kann sie, wenn eine Siegelfläche 2 verschlissen ist, um 90° gedreht und in dieser Position weiter verwendet werden.

Zum Bearbeiten von Metall mittels Ultraschall wird das zu bearbeitende Material zwischen der Siegelfläche 2 der Sonotrode 1 und einem Gegenwerkzeug (nicht gezeigt) angeordnet und dann die Ultraschallschwingeinheit in Schwingung versetzt, sodass über die Siegelflächen 2 eine Ultraschallschwingung in das zu bearbeitende Material übertragen werden kann.

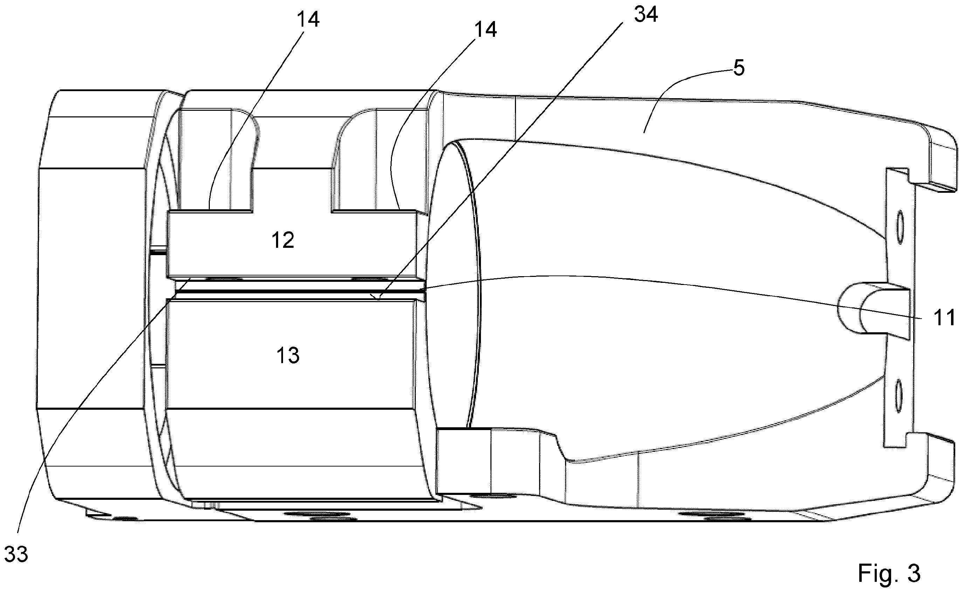

Die Halterung 5 von Figur 1 ist in Figur 3 separat dargestellt. Sie ist als Spannhülse ausgebildet. Es ist zu erkennen, dass die Halterung den Amplitudentransformator vollständig umschließt. Sie weist allerdings einen Schlitz 11 auf, der durch zwei Schenkelelemente 12, 13 der Halterung gebildet wird. In der in Figur 3 gezeigten Position kann den Amplitudentransformator 4 axial in die Halterung 5 geschoben werden. In dieser Position kann der Amplitudentransformator 4 und damit die gesamte Ultraschallschwingeinheit innerhalb der Halterung 5 um seine Längsachse gedreht werden. Sobald die gewünschte Position der Ultraschallschwingeinheit bzw. der Siegelflächen 2 der Sonotrode 1 erreicht ist, können die beiden Schenkelelemente 12, 13 mit Hilfe von Schrauben, die in den Bohrungen 14, die innerhalb des Schenkelelementes 13 als Gewindebohrung und innerhalb des Schenkelelementes 12 als Durchgangsbohrung ausgebildet sind, aufgenommen sind, aufeinander zubewegt werden, sodass der Innendurchmesser der hülsenartigen Halterung 5 verringert wird und der Amplitudentransformator 4 in der Halterung 5 festgeklemmt wird und dann keine Relativdrehung der Ultraschallschwingeinheit um ihre Längsachse gegenüber der Halterung 5 mehr möglich ist. Bei der gezeigten Ausführungsform weisen die Schenkelelemente 12,13 korrespondierende Schlitzwände, die als Anschlagsflächen dienen, auf. Dies bedeutet, dass der Abschnitt der Außenfläche der Ultraschallschwingeinheit und die Innenfläche der Spannhülse derart ausgebildet sind, dass mithilfe von Schrauben, die in die Bohrungen 14 eingreifen, die Schenkelelemente 12,13 soweit aufeinander zu bewegt werden können bis die Anschlagsflächen sich berühren und in dieser Situation die Ultraschallschwingeinheit fest innerhalb der Spannhülse gehalten wird. Durch diese Konfiguration wird sichergestellt, dass die Spannhülse nicht einen zu gro-βen Druck auf die empfindliche Ultraschallschwingeinheit ausüben kann. Es kann daher keine größere Kraft auf die Ultraschallschwingeinheit ausgeübt werden als diejenige, die die Hülse in dem Moment auf die Ultraschallschwingeinheit aufbringt, in dem die beiden Schlitzwände der Schenkelelemente 12,13 aufeinandertreffen.

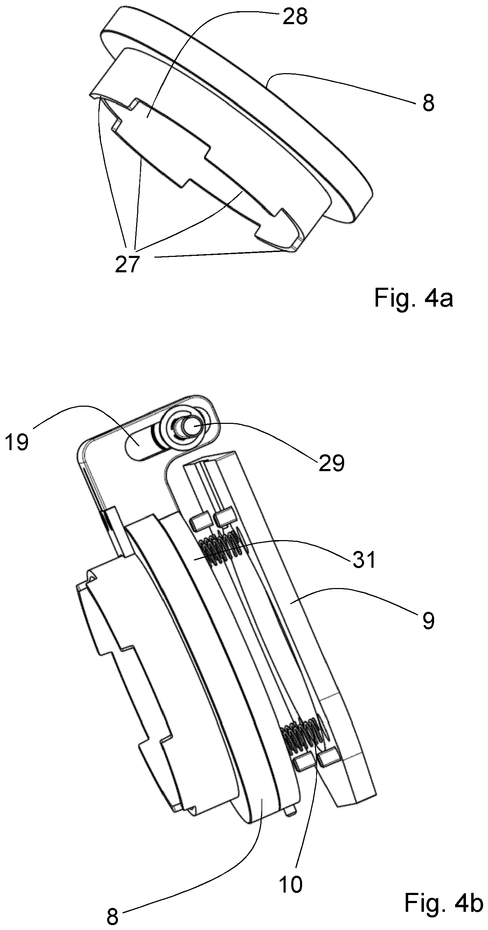

In Figur 4a ist eine perspektivische Ansicht des Kopplungselementes 8 der Winkelpositionierungseinrichtung gezeigt. Die Winkelpositionierungseinrichtung dient dazu, die Winkelposition der Siegelflächen 2 der Sonotrode 1 auf einfache Weise möglichst genau einzustellen.

Die Winkelpositionierungsvorrichtung weist das Kopplungselement 8 auf, das als Hülse ausgebildet ist. An seiner dem Konverter abgewandten Seite sind eine Reihe von Vorsprüngen 27 bzw. Ausnehmungen 28 angeordnet.

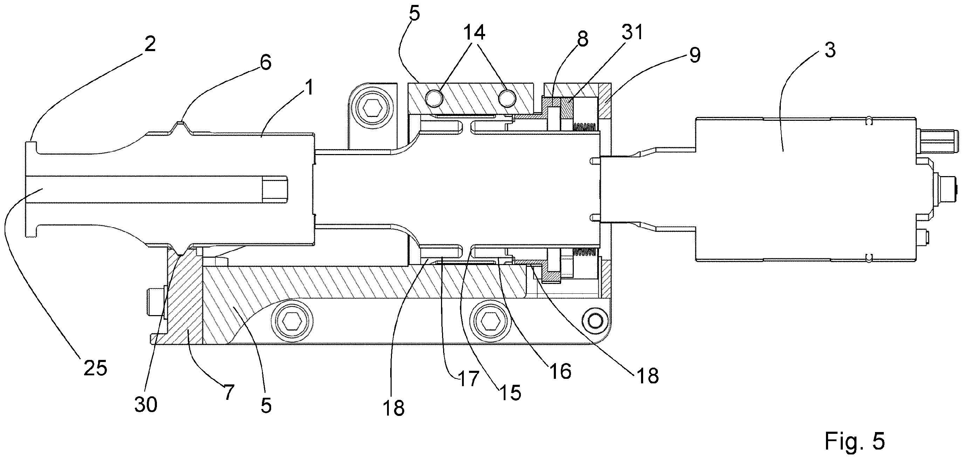

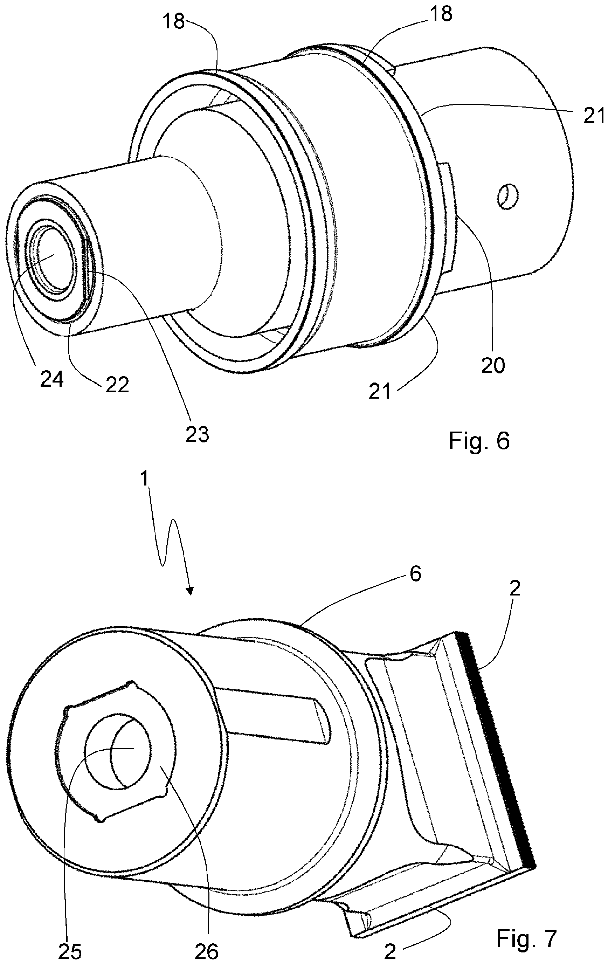

Wie man insbesondere in Figur 5 erkennen kann, weist der Amplitudentransformator einen Außenwulst auf, der hier durch einen Steg 15 und einen Flansch mit einem ersten und einem zweiten Hülsenabschnitt 16, 17 gebildet wird. Der Steg 15 ist an einem Schwingungsknoten mit dem Amplitudentransformator 4 verbunden. Von dem Amplitudentransformator 4 erstreckt sich am Ende des Steges 15 der erste Hülsenabschnitt 16 in Richtung des Konverters 3 und der zweite Hülsenabschnitt 17 in Richtung der Sonotrode 1. Sowohl der erste Hülsenabschnitt 16 als auch der zweite Hülsenabschnitt 17 haben einen umlaufenden Bund 18, die als Kontaktflächen für die Halterung 5 dienen. Diese Art der Befestigung erlaubt eine Halterung ohne dass es zu einer nennenswerten Beeinflussung des Schwingungsverhaltens der Ultraschallschwingeinheit kommt. In Figur 6 ist eine perspektivische Darstellung des Amplitudentransformators 4 dargestellt. Man erkennt die beiden umlaufenden Bunde 18. Der erste Hülsenabschnitt 16 weist eine Reihe von Vorsprüngen 20 bzw. Ausnehmungen 21 auf, die korrespondierend zu den Vorsprüngen 27 und den Ausnehmungen 28 der Winkelpositionierungsvorrichtung ausgebildet sind. Die Vorsprünge 27 und die Ausnehmungen 28 der Winkelpositionierungsvorrichtung können somit mit den Ausnehmungen 21 und den Vorsprüngen 20 verbunden werden. Durch diese Form schlüssige Verbindung wird eine Drehung der Ultraschallschwingeinheit um die Längsachse verhindert, während einer Relativbewegung zwischen der Ultraschallschwingeinheit und der Winkelpositioniervorrichtung in Richtung der Längsachse nicht verhindert wird.

In Figur 4b ist die gesamte Drehpositionierungsvorrichtung dargestellt. Das bereits in Figur 4a gezeigte Kopplungselement 8 liegt an einer Druckplatte 31 an, welche wiederum mittels der Federn 10 federnd an dem Befestigungselement 9 angeordnet ist. Das Befestigungselement 9 ist stationär angeordnet. Aufgrund der Federn 10 kann die Druckplatte 31 in axialer Richtung relativ zum Befestigungselement 9 bewegt werden. Da das Kopplungselement 8 an der Druckplatte 31 anliegt, bewegt sich das Kopplungselement in axialer Richtung zusammen mit der Druckplatte 31. Das Kopplungselement 8 kann relativ zur Druckplatte 31 um die Längsachse zwischen zwei Positionen hin und her gedreht werden, wie weiter unten beschrieben wird.

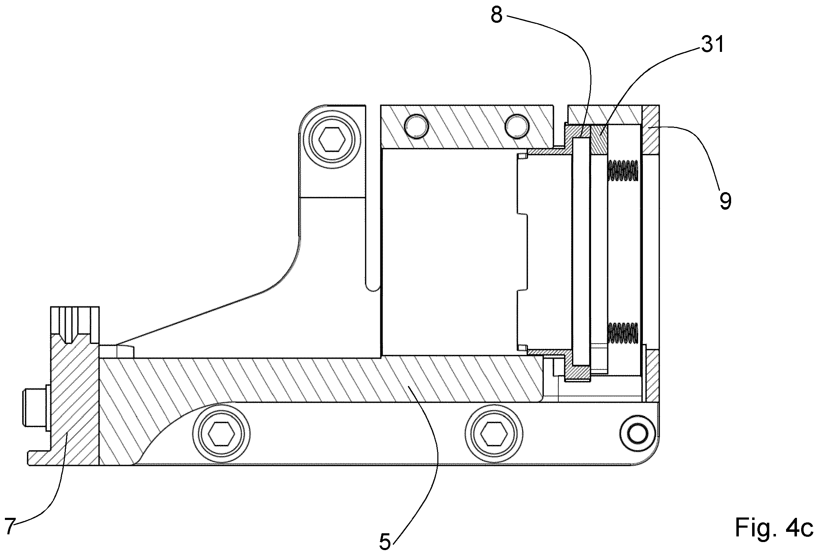

Figur 4c ist eine Schnittansicht des Halters 5 zusammen mit der Drehpositionierungsvorrichtung gezeigt.

Wie auch in Figur 2 gezeigt ist, drücken Federelemente 10 das Kopplungselement 8 nach vorne, d.h. in Richtung der Sonotrode 1, und damit in Eingriff mit den Vorsprüngen 20 und Ausnehmungen 21 des Amplitudentransformators 4.

So lange die Halterung 5 noch nicht in ihrer geklemmten Position ist, kann die Ultraschallschwingeinheit um ihre Längsachse gedreht werden, in dem das Kopplungselement 8 mithilfe der Ultraschallschwingeinheit entgegen der Kraft der Federn 10 nach hinten, d.h. in Richtung des Konverters 3 gedrückt wird. Die Ultraschallschwingeinheit wird dann so lange um ihre Längsachse gedreht bis die Vorsprünge 20 in den Ausnehmungen 28 zu liegen kommen. Das Kopplungselement 8 rastet somit in den Flansch des Amplitudentransformators 4 ein.

In der gezeigten Ausführungsform entspricht die Zahl der Vorsprünge 20 bzw. 27 und die Zahl der Ausnehmungen 21 bzw. 28 der Anzahl von Siegelflächen 2 an der Sonotrode 1. Es ist daher sichergestellt, dass die Ultraschallschwingeinheit nur in ausgewählten Winkelpositionen montiert werden kann.

Bei der gezeigten Ausführungsform ist zusätzlich eine kleine Relativdrehung des Kopplungselementes 8 gegenüber dem Befestigungselement 9 um die Längsachse möglich. Um eine solche geringfügige Drehung zu bewerkstelligen ist ein als Öse 19 ausgebildetes Justierelement vorgesehen, das lösbar mit dem Kopplungselement 8 verbunden ist. Eine als Schraube ausgebildete Feinjustiervorrichtung 29 verbindet die das Justierelement mit der Halterung 5. Durch Drehen der Schraube 29 kann somit in einem gewissen Umfang das mit dem Justierelement verbundene Kopplungselement 8 gegenüber der Halterung 5 und dem Befestigungselement 9 verdreht werden, um eine Feinjustierung der Winkelposition vorzunehmen. Daher hat die Schraube 29 innerhalb des in der Öse 19 vorgesehenen Langlochs sowohl in axialer Richtung als auch in radialer Richtung etwas Spiel.

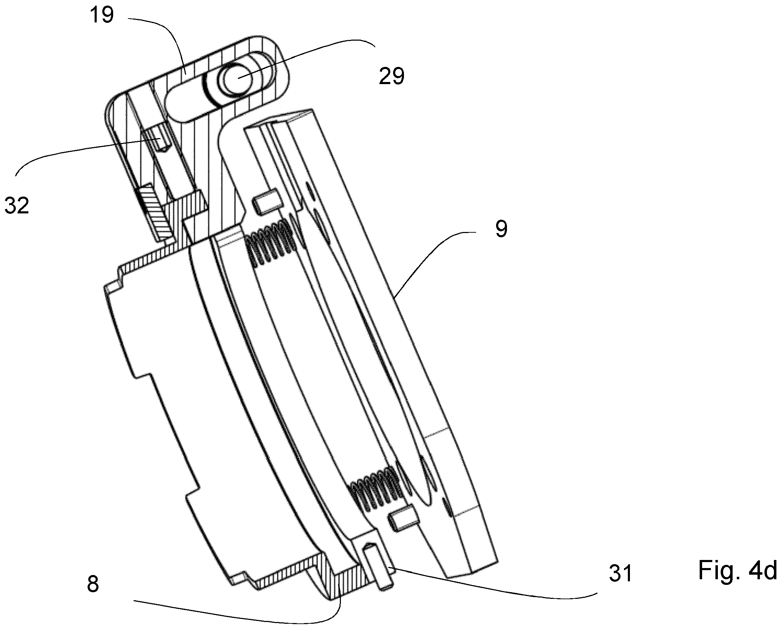

In Figur 4d ist eine weitere perspektivische Schnittansicht durch die Winkelpositionierungsvorrichtung gezeigt. In der Öse 19 ist eine Gewindebohrung eingebracht, in welche eine Madenschraube 32 eingreift. Mithilfe der Madenschraube 32 kann die Öse 19 mit dem Kopplungselement 8 verklemmt werden, sodass Kopplungselement 8 und Öse 19 nur gemeinsam um die Längsachse gedreht werden können.

Bei der erstmaligen Justierung einer Ultraschallschwingeinheit innerhalb der Halterung oder wenn die Winkelposition der Ziegelflächen zwei gegenüber den Vorsprüngen 20 und Ausnehmungen 21 nicht bekannt ist, kann somit die Madenschraube 32 gelöst werden, die Ultraschallschwingeinheit in die Halterung eingesetzt werden, sodass das Kopplungselement 8 entgegen der Kraft der Federn 10 in Richtung des Befestigungselementes 9 gedrückt wird, dann um ihre Längsachse gedreht werden, bis die Vorsprünge 20 und Ausnehmungen 21 der Ultraschallschwingeinheit in den korrespondierenden Vorsprüngen 27 und Ausnehmungen 28 des Kopplungselement des 8 zu liegen kommen. In dieser Position wird das Kopplungselement 8 aufgrund der Kraft der Federn 10 wieder von dem Befestigungselement 9 weggedrückt. Nun kann die Ultraschallschwingeinheit um ihre Längsachse gedreht werden, bis die Siegelflächen 2 in etwa in der gewünschten Drehposition sind. Da die Madenschraube 32 gelöst ist, dreht sich das Kopplungselement 8 mit der Ultraschallschwingeinheit mit, während die Druckplatte 31 an Ihrer Position verbleibt.

Sobald die gewünschte Drehposition der Ultraschallschwingeinheit in etwa erreicht ist, kann die Madenschraube 32 festgedreht werden, um die Öse 19 mit dem Kopplungselement 8 zu verbinden. Eine weitere Drehung der Ultraschallschwingeinheit um ihre Längsachse ist nun nur noch sehr begrenzt durch Drehen der Schraube 29 möglich.

Wie in Figur 6 zu sehen ist weist der Amplitudentransformator 4 an seiner der Sonotrode 1 zugewandten Seite einen Zapfen 22 auf. In der Figur 7 ist eine perspektivische Ansicht der Sonotrode 1 gezeigt. Die Sonotrode 1 weist an ihrer dem Amplitudentransformator 4 zugewandten Seite eine zu dem Zapfen 22 korrespondierende Aussparung 26 auf. Der Zapfen 22 weist Ausschnitte 23 auf, die in der korrespondierenden Aussparung 26 ebenfalls zu erkennen sind. Wird der Zapfen 22 in die Aussparung 26 eingesetzt, so entsteht eine formschlüssige Verbindung zwischen Sonotrode 1 und Amplitudentransformator 4 in einer Drehrichtung um die Längsachse.

Die Sonotrode 1 weist eine als Stufenbohrung ausgebildete Zentralbohrung 25 auf, durch die eine Schraube in eine korrespondierende Zentralgewindebohrung 24 des Amplitudentransformators geführt werden kann, um die Sonotrode 1 an dem Amplitudentransformator 4 zu befestigen.

Wie in der Schnittansicht von Figur 5 zu erkennen ist, weist die Sonotrode 1 eine Außenrippe 6 auf, die in einem Schwingungsknoten der Resonanzfrequenz der Sonotrode 1 angeordnet ist. Die Außenrippe ist in der gezeigten Ausführungsform umlaufend ausgebildet. An der Halterung 5 ist ein Abstützelement befestigt, welches in radialer Richtung zwischen einer äußeren Position, in welcher die Ultraschallschwingeinheit in der Halterung aufgenommen werden kann, und einer inneren Position, in welcher das Abstützelement eine Bewegung der Ultraschallschwingeinheit in Richtung der Längsachse verhindert. In dieser Position kann das Abstützelement arretiert werden, um eine unerwünschte Bewegung des Abstützelementes 7 in Richtung der äußeren Position zu verhindern. Das Abstützelement 7 weist eine Nut 30 auf, in welcher die Außenrippe 6 zu liegen kommt. Wird nun wie in Figur 5 von oben durch das zu bearbeitende Material auf die Sonotrode eine Kraft ausgeübt, so wird diese Kraft von dem Abstützelement 7 aufgenommen. Die vorgesehene umschließende Halterung 5 an dem Amplitudentransformator 4 ist von dem Bearbeitungsort, d.h. den Siegelflächen 4 relativ weit entfernt, sodass bereits kleine Schweißkräfte auf die Siegelfläche 2 zu einem Verbiegen der Ultraschallschwingeinrichtung führen würden. Daher ist die Abstützvorrichtung 7 vorgesehen.

Um die Ultraschallschwingeinheit in der Halterung aufzunehmen, muss zunächst die Klemmung mittels der Schrauben in den Bohrungen 14 gelöst werden. Zudem muss das Abstützelement 7 radial nach außen verschoben werden. Nun kann die Ultraschallschwingeinheit in die Halterung 5 eingesetzt werden. Dabei wird das Kopplungselement 8 sowie die Druckplatte 31 gegen die Federkraft der Federn 10 in Richtung des Befestigungselements 9 gedrückt bis die Außenrippe 6 in der Nut 30 des Abstützelementes 7, nachdem dieses radial nach innen bewegt und arretiert worden ist, zu liegen kommt. Damit ist die axiale Position der Ultraschallschwingeinheit festgelegt. Die Winkelpositionierung erfolgt dann dadurch, dass die Ultraschallschwingeinrichtung so lange um ihre Längsachse gedreht wird bis die Vorsprünge vom Kopplungselement 8 in die entsprechenden Ausnehmungen am ersten Hülsenabschnitt 16 einrasten. In dieser Position ist dann auch die Winkelposition nahezu perfekt ausgerichtet. Die Feinabstimmung erfolgt mit Hilfe der Feinjustiervorrichtung, d.h. der Öse 19 und der Schrauben 29, mit deren Hilfe eine Feinjustierung der Winkelposition erfolgen kann.

Sobald die korrekte Position der Ultraschallschwingeinheit erreicht ist, können mit Hilfe der Befestigungsschrauben, die in die Bohrungen 14 eingreifen, die Schenkelelemente 12 und 13 aufeinander zubewegt werden, um den Schlitz 11 zu verkleinern und die Ultraschallschwingeinheit in der Haltehülse umschließend zu klemmen.

### Bezugszeichen

- 1: Sonotrode
- 2: Siegelfläche
- 3: Konverter
- 4: Amplitudentransformator
- 5: Halterung
- 6: Außenrippe
- 7: Abstützelement
- 8: Kopplungselement
- 9: Befestigungselement
- 10: Federn
- 11: Schlitz
- 12: Schenkelelement
- 13: Schenkelelement
- 14: Bohrung
- 15: Steg
- 16: erster Hülsenabschnitt
- 17: zweiter Hülsenabschnitt
- 18: Bund
- 19: Öse
- 20: Vorsprung
- 21: Ausnehmung
- 22: Zapfen
- 23: Ausschnitt
- 24: Zentralbohrung
- 25: Zentralbohrung
- 26: Aussparung
- 27: Vorsprung
- 28: Ausnehmung
- 29: Schraube
- 30: Nut
- 31: Druckplatte
- 32: Madenschraube
- 33: Schlitzwand
- 34: Schlitzwand

## Patentansprüche

1. Ultraschallschweißanlage mit einer Ultraschallschwingeinheit, die eine Sonotrode (1) und einen Konverter (3) aufweist, wobei die Sonotrode (1) und der Konverter (3) entlang einer Längsachse nebeneinander angeordnet sind und die Ultraschallschwingeinheit mit einer Ultraschallschwingung in Richtung der Längsachse mit einer Wellenlänge λ/2 in Resonanz gebracht werden kann, wobei eine Halterung (5) zum Halten der Ultraschallschwingeinheit vorgesehen ist, wobei die Halterung (5) eine Winkelpositionierungsvorrichtung aufweist, **dadurch gekennzeichnet, dass** die Winkelpositionierungsvorrichtung und die Ultraschallschwingeinheit derart ausgebildet sind, dass sie formschlüssig miteinander verbindbar sind, so dass eine Drehung der Ultraschallschwingeinheit um die Längsachse durch die formschlüssige Verbindung verhindert wird und eine Relativbewegung zwischen der Ultraschallschwingeinheit und der Halterung (5) in Richtung der Längsachse nicht verhindert wird, wobei die Ultraschallschwingeinheit einen Außenwulst mit mindestens einer Ausnehmung (21) aufweist, wobei die Winkelpositionierungsvorrichtung mindestens einen zu der Ausnehmung (21) korrespondierenden Vorsprung (27) aufweist, der in die Ausnehmung (21) eingreifen kann und somit die formschlüssige Verbindung verwirklicht.

2. Ultraschallschweißanlage nach Anspruch 1, **dadurch gekennzeichnet, dass** der Au-βenwulst mehrere Ausnehmungen (21) aufweist, wobei vorzugsweise die Winkelpositionierungsvorrichtung mehrere zu den mehreren Ausnehmungen (21) korrespondierende Vorsprünge (27) aufweist, wobei besonders bevorzugt die Ultraschallschwingeinheit in mehreren relativ zueinander um die Längsachse gedrehten Positionen mit der Winkelpositionierungsvorrichtung formschlüssig verbunden werden kann.

3. Ultraschallschweißanlage nach Anspruch 1 oder 2, **dadurch gekennzeichnet, dass** der Vorsprung (27) der Winkelpositionierungsvorrichtung sich in axialer Richtung entlang der Längsachse erstreckt.

4. Ultraschallschweißanlage nach einem der Ansprüche 1-3, **dadurch gekennzeichnet, dass** die mindestens eine Ausnehmung (21) des Außenwulstes sowie der Vorsprung (27) der Winkelpositionierungsvorrichtung zueinander korrespondierende Kontaktflächen aufweisen, die bei in die Winkelpositionierungsvorrichtung eingesetzter Ultraschallschwingeinheit bei einer Drehung der Ultraschallschwingeinheit um die Längsachse miteinander in Kontakt treten, wobei vorzugsweise die Kontaktflächen der Ausnehmung (21) und/oder des Vorsprungs (27) gegenüber der Längsachse geneigt sind.

5. Ultraschallschweißanlage nach einem der Ansprüche 1 bis 4, **dadurch gekennzeichnet, dass** die Winkelpositionierungsvorrichtung ein Befestigungselement (9) zum Befestigen der Winkelpositionierungsvorrichtung an einem Maschinenständer und ein Kopplungselement (8) aufweist, welches in Richtung der Längsachse relativ zum Befestigungselement (9) zwischen zwei Positionen hin und her bewegbar ist, wobei die formschlüssige Verbindung zwischen Kopplungselement (8) und Ultraschallschwingeinheit hergestellt werden kann, wobei vorzugsweise das Kopplungselement (8) in eine der Positionen elastisch vorgespannt ist, wobei besonders bevorzugt die Vorspannung mit Hilfe von zumindest einem Federelement (10) erfolgt.

6. Ultraschallschweißanlage nach Anspruch 5, **dadurch gekennzeichnet, dass** eine Feinjustiervorrichtung vorgesehen ist, welche mit dem Kopplungselement (8) verbunden oder verbindbar ist, wobei vorzugsweise die Feinjustiervorrichtung aus einem Justierelement mit Langloch sowie einer durch das Langloch greifenden Schraube besteht, welche in eine Gewindebohrung des Befestigungselementes (9) oder der Halterung (5) greift.

7. Ultraschallschweißanlage nach einem der Ansprüche 1 bis 6, **dadurch gekennzeichnet, dass** der Außenwulst an der Sonotrode (1) oder einem zwischen Sonotrode (1) und Konverter (3) angeordneten Amplitudentransformator (4) angeordnet ist, wobei vorzugsweise der Wulst in einem Schwingungsknoten der Resonanzschwingung mit der Wellenlänge λ angeordnet ist.

8. Ultraschallschweißanlage nach einem der Ansprüche 1 bis 7, **dadurch gekennzeichnet, dass** ein Abstützelement (7) zum Abstützen einer senkrecht zur Längsachse auf die Sonotrode (1) aufgebrachten Kraft vorgesehen ist, wobei Sonotrode (1) und Abstützelement (7) zueinander korrespondierende Abstützflächen aufweisen, die zumindest dann, wenn eine Kraft senkrecht zur Längsachse auf die Sonotrode (1) ausgeübt wird, miteinander in Kontakt treten, wobei die Abstützflächen derart ausgebildet sind, dass sie, wenn sie miteinander in Kontakt stehen eine Relativbewegung der Sonotrode (1) gegenüber dem Abstützelement (7) in Richtung der Längsachse verhindern und eine Drehung der Sonotrode (1) nicht behindert, wobei vorzugsweise entweder die Sonotrode (1) eine Rippe und das Abstützelement eine Nut hat oder die Sonotrode (1) eine Nut und das Abstützelement eine Rippe hat, wobei Rippe und Nut die korrespondierenden Abstützflächen aufweisen, wobei besonders bevorzugt der Wulst oder die Nut der Sonotrode (1) in einem Schwingungsknoten der Resonanzschwingung mit der Wellenlänge λ/2 angeordnet sind.

9. Ultraschallschweißanlage nach Anspruch 8, **dadurch gekennzeichnet, dass** ein Gegenwerkzeug vorgesehen ist, wobei Sonotrode (1) und Gegenwerkzeug in einer Richtung senkrecht zur Längsachse relativ zueinander bewegbar sind und das Abstützelement (7) derart positioniert ist, dass eine von dem Gegenwerkzeug eventuell über ein zwischen Sonotrode (1) und Gegenwerkzeug positioniertes Material auf die Sonotrode (1) ausgeübte Kraft auf das Abstützelement (7) übertragen wird.

10. Ultraschallschweißanlage nach einem der Ansprüche 1-9, **dadurch gekennzeichnet, dass** ein zwischen Sonotrode (1) und Konverter (3) angeordneter Amplitudentransformator (4) vorgesehen ist, wobei der Amplitudentransformator (4) mit dem Konverter (3) und/oder der Sonotrode (1) über eine formschlüssige Verbindung, die einen Formschluss in allen Richtungen der zur Längsachse senkrechten Ebene bereitstellt, verbunden sind.

11. Ultraschallschweißanlage nach Anspruch 10, **dadurch gekennzeichnet, dass** die formschlüssige Verbindung zwischen Amplitudentransformator (4) und Konverter (3) oder zwischen Amplitudentransformator (4) und Sonotrode (1) aus einem Zapfen (22) und einer korrespondierenden Aussparung (26) besteht, wobei vorzugsweise der Zapfen (22) an dem Amplitudentransformator (4) und die korrespondierende Aussparung (26) an der Sonotrode (1) oder dem Konverter (3) angeordnet ist.

12. Ultraschallschweißanlage nach Anspruch 11, **dadurch gekennzeichnet, dass** der Zapfen (22) und die korrespondierende Aussparung (26) nicht rotationssymmetrisch zur Längsachse ausgebildet sind, wobei vorzugsweise der Zapfen (22) und die korrespondierende Aussparung (26) drehsymmetrisch um die Längsachse mit einer n-zähligen Drehachse ausgebildet sind, wobei n eine natürliche Zahl größer eins ist, wobei besonders bevorzugt die Sonotrode (1) drehsymmetrisch um die Längsachse mit einer m-zähligen Drehachse ausgebildet ist und m gleich n ist.

13. Ultraschallschweißanlage nach Anspruch 11 oder 12, **dadurch gekennzeichnet, dass** Zapfen (22) und korrespondierende Aussparung (26) konusförmig ausgebildet sind oder einen konusförmigen Abschnitt aufweisen.

14. Ultraschallschweißanlage nach einem der Ansprüche 1 bis 13, **dadurch gekennzeichnet, dass** die Halterung (5) einen Klemmvorrichtung aufweist, welche zwischen einer geöffneten Position, in welcher die Ultraschallschwingeinheit aus der Halterung (5) entnommen werden kann, und einer geschlossenen Position, in welcher die Klemmvorrichtung an zumindest zwei Haltepunkten mit der Ultraschallschwingeinheit in Kontakt tritt und eine Kraft auf diese ausübt, so dass die Ultraschallschwingeinheit gehalten wird, hin und her bewegbar ist, wobei vorzugsweise die Haltepunkte auf dem Außenwulst angeordnet sind.

## Claims

1. An ultrasonic welding installation comprising an ultrasonic vibration unit having a sonotrode (1) and a converter (3), wherein the sonotrode (1) and the converter (3) are arranged in mutually adjacent relationship along a longitudinal axis and the ultrasonic vibration unit can be caused to resonate with an ultrasonic vibration in the direction of the longitudinal axis with a wavelength λ/2, wherein there is provided a holder (5) for holding the ultrasonic vibration unit, wherein the holder (5) has an angle positioning device, **characterised in that** the angle positioning device and the ultrasonic vibration unit are of such a configuration that they can be connected together in positively locking relationship so that a rotation of the ultrasonic vibration unit about the longitudinal axis is prevented by the positively locking connection and a relative movement between the ultrasonic vibration unit and the holder (5) in the direction of the longitudinal axis is not prevented, wherein the ultrasonic vibration unit has an outer bead with at least one recess (21), wherein the angle positioning device has at least one projection (27) which corresponds to the recess (21) and which can engage into the recess (21) and thus provides the positively locking connection.

2. An ultrasonic welding installation according to claim 1 **characterised in that** the outer bead has a plurality of recesses (21), wherein preferably the angle positioning device has a plurality of projections (27) corresponding to the plurality of recesses (21), wherein particularly preferably the ultrasonic vibration unit can be connected in positively locking relationship to the angle positioning device in a plurality of positions rotated relative to each other about the longitudinal axis.

3. An ultrasonic welding installation according to claim 1 or claim 2 **characterised in that** the projection (27) of the angle positioning device extends along the longitudinal axis in the axial direction.

4. An ultrasonic welding installation according to one of claims 1 to 3 **characterised in that** the at least one recess (21) of the outer bead and the projection (27) of the angle positioning device have mutually corresponding contact surfaces which when the ultrasonic vibration unit is fitted into the angle positioning device come into contact with each other upon rotation of the ultrasonic vibration unit about the longitudinal axis, wherein preferably the contact surfaces of the recess (21) and/or the projection (27) are inclined relative to the longitudinal axis.

5. An ultrasonic welding installation according to one of claims 1 to 4 **characterised in that** the angle positioning device has a fixing element (9) for fixing the angle positioning device to a machine stand and has a coupling element (8) which is reciprocable between two positions in the direction of the longitudinal axis relative to the fixing element (9), wherein the positively locking connection can be produced between the coupling element (8) and the ultrasonic vibration unit, wherein preferably the coupling element (8) is elastically prestressed into one of the positions, wherein particularly preferably the prestressing is effected by means of at least one spring element (10).

6. An ultrasonic welding installation according to claim 5 **characterised in that** there is provided a fine adjustment device which is or can be connected to the coupling element (8), wherein preferably the fine adjustment device comprises an adjusting element with a slot and a screw which engages through the slot and engages into a threaded bore in the fixing element (9) or the holder (5).

7. An ultrasonic welding installation according to one of claims 1 to 6 **characterised in that** the outer bead is arranged on the sonotrode (1) or an amplitude transformer (4) arranged between the sonotrode (1) and the converter (3), wherein preferably the bead is arranged in a vibration node of the resonance vibration of the wavelength λ.

8. An ultrasonic welding installation according to one of claims 1 to 7 **characterised in that** there is provided a support element (7) for supporting a force applied to the sonotrode (1) perpendicularly to the longitudinal axis, wherein the sonotrode (1) and the support element (7) have mutually corresponding support surfaces which at least when a force is applied to the Sonotrode (1) perpendicularly to the longitudinal axis come into contact with each other, wherein the support surfaces are of such a configuration that when they are in contact with each other they prevent a relative movement of the sonotrode (1) with respect to the support element (7) in the direction of the longitudinal axis and do not impede a rotation of the sonotrode (1), wherein preferably either the sonotrode (1) has a rib and the support element has a groove or the sonotrode (1) has a groove and the support element has a rib, the rib and the groove having corresponding support surfaces, wherein preferably the bead or the groove of the sonotrode (1) are arranged at a vibration node of the resonance vibration of the wavelength λ/2.

9. An ultrasonic welding installation according to claim 8 **characterised in that** there is provided a counterpart tool, wherein the sonotrode (1) and the counterpart tool are moveable relative to each other in a direction perpendicular to the longitudinal axis and the support element (7) is so positioned that a force exerted on the sonotrode (1) possibly by way of a material positioned between the sonotrode (1) and the counterpart tool is transmitted to the support element (7).

10. An ultrasonic welding installation according to one of claims 1 to 9 **characterised in that** there is provided an amplitude transformer (4) arranged between the sonotrode (1) and the converter (3), wherein the amplitude transformer (4) is connected to the converter (3) and/or the sonotrode (1) by way of a positively locking connection which provides a positive locking relationship in all directions of the plane perpendicular to the longitudinal axis.

11. An ultrasonic welding installation according to claim 10 **characterised in that** the positively locking connection between the amplitude transformer (4) and the converter (3) or between the amplitude transformer (4) and the sonotrode (1) comprises a pin (22) and a corresponding opening (26), wherein preferably the pin (22) is arranged on the amplitude transformer (4) and the corresponding opening (26) is on the sonotrode (1) or the converter (3).

12. An ultrasonic welding installation according to claim 11 **characterised in that** the pin (22) and the corresponding opening (26) are not of a rotationally symmetrical configuration relative to the longitudinal axis, wherein preferably the pin (22) and the corresponding opening (26) are of a rotary symmetrical configuration about the longitudinal axis with a n-fold axis of rotation, wherein n is a natural number greater than one, wherein particularly preferably the sonotrode (1) is of a rotary symmetrical configuration about the longitudinal axis with a m-fold axis of rotation and m is equal to n.

13. An ultrasonic welding installation according to claim 11 or claim 12 **characterised in that** the pin (22) and the corresponding opening (26) are of a conical configuration or have a conical portion.

14. An ultrasonic welding installation according to one of claims 1 to 13 **characterised in that** the holder (5) has a clamping device reciprocable between an opened position in which the ultrasonic vibration unit can be removed from the holder (5) and a closed position in which the clamping device comes into contact with the ultrasonic vibration at at least two holding points and exerts a force on same so that the ultrasonic vibration unit is held, wherein preferably the holding points are arranged on the outer bead.

## Revendications

1. Dispositif de soudage par ultrasons avec une unité émettrice d'ultrasons qui comprend une sonotrode (1) et un convertisseur (3), la sonotrode (1) et le convertisseur (3) étant disposés l'un à côté de l'autre le long d'un axe longitudinal et l'unité émettrice d'ultrasons pouvant être mise en résonance à une longueur d'onde de λ/2 à l'aide d'une vibration à ultrasons en direction de l'axe longitudinal, un support (5) pour maintenir l'unité émettrice d'ultrasons étant prévu, le support (5) comprenant un dispositif de positionnement angulaire,
**caractérisé en ce que** le dispositif de positionnement angulaire et l'unité émettrice d'ultrasons sont configurés de façon qu'ils puissent être assemblés par complémentarité de forme, si bien qu'une rotation de l'unité émettrice d'ultrasons autour de l'axe longitudinal est empêchée par l'assemblage par complémentarité de forme et qu'un mouvement relatif entre l'unité émettrice d'ultrasons et le support (5) dans la direction de l'axe longitudinal n'est pas empêché, l'unité émettrice d'ultrasons comprenant un bourrelet extérieur avec au moins un évidement (21), le dispositif de positionnement angulaire comprenant au moins une saillie (27) correspondant à l'évidement (21), qui peut s'engager dans l'évidement (21) et réalise ainsi l'assemblage par complémentarité de forme.

2. Dispositif de soudage par ultrasons selon la revendication 1, **caractérisé en ce que** le bourrelet extérieur comprend plusieurs évidements (21), le dispositif de positionnement angulaire comprenant plusieurs saillies (27) correspondant auxdits plusieurs évidements (21), de façon particulièrement préférée, l'unité émettrice d'ultrasons pouvant être assemblée par complémentarité de forme avec le dispositif de positionnement angulaire dans plusieurs positions relatives les unes par rapport aux autres autour de l'axe longitudinal.

3. Dispositif de soudage par ultrasons selon la revendication 1 ou 2, **caractérisé en ce que** la saillie (27) du dispositif de positionnement angulaire s'étend en direction axiale le long de l'axe longitudinal.

4. Dispositif de soudage par ultrasons selon l'une des revendications 1 à 3, **caractérisé en ce que** ledit au moins un évidement (21) du bourrelet extérieur ainsi que la saillie (27) du dispositif de positionnement angulaire comprennent des surfaces de contact correspondant les unes aux autres qui, lorsque l'unité émettrice d'ultrasons est insérée dans le dispositif de positionnement angulaire, entrent en contact les unes avec les autres lors d'une rotation de l'unité émettrice d'ultrasons autour de l'axe longitudinal, les surfaces de contact de l'évidement (21) et/ou de la saillie (27) étant inclinées par rapport à l'axe longitudinal.

5. Dispositif de soudage par ultrasons selon l'une des revendications 1 à 4, **caractérisé en ce que** le dispositif de positionnement angulaire comprend un élément de fixation (9) pour fixer le dispositif de positionnement angulaire à un support de machine et un élément d'accouplement (8) qui est mobile par rapport à l'élément de fixation (9), dans la direction de l'axe longitudinal, en va et vient entre deux positions, l'assemblage par complémentarité de forme pouvant être réalisé entre l'élément d'accouplement (8) et l'unité émettrice d'ultrasons, l'élément d'accouplement (8) étant de préférence précontraint élastiquement vers une des positions, la précontrainte étant réalisée de façon particulièrement préférée à l'aide d'un élément de ressort (10).

6. Dispositif de soudage par ultrasons selon la revendication 5, **caractérisé en ce qu'**il est prévu un dispositif d'ajustage fin qui est assemblé, ou peut être assemblé, avec l'élément d'accouplement (8), le dispositif d'ajustage fin consistant de préférence en un élément d'ajustage ayant un trou oblong et une vis qui passe par le trou oblong et s'engage dans un taraudage de l'élément de fixation (9) ou du support (5).

7. Dispositif de soudage par ultrasons selon l'une des revendications 1 à 6, **caractérisé en ce que** le bourrelet extérieur est disposé sur la sonotrode (1) ou sur un transformateur d'amplitude (4) disposé entre la sonotrode (1) et le convertisseur (3), le bourrelet étant disposé de préférence dans un noeud de vibration de la vibration en résonance ayant la longueur d'onde λ.

8. Dispositif de soudage par ultrasons selon l'une des revendications 1 à 7, **caractérisé en ce qu'**il est prévu un élément de soutien (7) pour soutenir un effort appliqué à la sonotrode (1) perpendiculairement à l'axe longitudinal, la sonotrode (1) et l'élément de soutien (7) comprenant des surfaces de soutien qui correspondent l'une à l'autre et entrent en contact l'une avec l'autre au moins lorsqu'un effort est appliqué à la sonotrode (1) perpendiculairement à l'axe longitudinal, les surfaces de soutien étant configurées de façon qu'elles empêchent un mouvement relatif, dans la direction de l'axe longitudinal, de la sonotrode (1) par rapport à l'élément de soutien (7) lorsqu'elles sont en contact l'une avec l'autre et qu'elles n'empêchent pas de rotation de la sonotrode (1), de préférence soit la sonotrode (1) comprenant une nervure et l'élément de soutien comprenant une rainure, soit la sonotrode (1) comprenant une rainure et l'élément de soutien comprenant une nervure, la nervure et la rainure comprenant les surfaces de soutien correspondants, de façon particulièrement, le bourrelet ou la rainure de la sonotrode (1) étant disposé dans un noeud de vibration de la vibration en résonance avec la longueur d'onde λ/2.

9. Dispositif de soudage par ultrasons selon la revendication 8, **caractérisé en ce qu'**il est prévu un contre-outil, la sonotrode (1) et le contre-outil étant mobiles l'un par rapport à l'autre dans une direction perpendiculaire à l'axe longitudinal et l'élément de soutien (7) étant positionné de façon qu'un effort appliqué à la sonotrode (1), éventuellement par un matériau positionné entre la sonotrode (1) et l'contre-outil, soit transmis à l'élément de soutien (7).

10. Dispositif de soudage par ultrasons selon l'une des revendications 1 à 9, **caractérisé en ce qu'**il est prévu un transformateur d'amplitude (4) disposé entre la sonotrode (1) et le convertisseur (3), le transformateur d'amplitude (4) étant assemblé avec le convertisseur (3) et/ou la sonotrode (1) via un assemblage par complémentarité de forme qui établit une complémentarité de forme dans toutes les directions du plan perpendiculaire à l'axe longitudinal.

11. Dispositif de soudage par ultrasons selon la revendication 10, **caractérisé en ce que** l'assemblage par complémentarité de forme du transformateur d'amplitude (4) avec le convertisseur (3) ou du transformateur d'amplitude (4) avec la sonotrode (1) est constitué par une saillie (22) et un évidement (26) correspondant, la saillie (22) étant disposé au transformateur d'amplitude (4) et l'évidement (26) correspondant étant disposé à la sonotrode (1) ou au convertisseur (3).

12. Dispositif de soudage par ultrasons selon la revendication 11, **caractérisé en ce que** la saillie (22) et l'videment (26) correspondant ne sont pas formés de façon symétrique en rotation autour de l'axe longitudinal, la saillie (22) et l'évidement (26) correspondant étant formés de préférence de façon symétrique en rotation autour de l'axe longitudinal avec un axe de rotation d'ordre n, n étant un nombre naturel supérieur à un, la sonotrode (1) étant formée de préférence de façon symétrique en rotation autour de l'axe longitudinal avec un axe de rotation d'ordre m, et m étant égal à n.

13. Dispositif de soudage par ultrasons selon la revendication 11 ou 12, **caractérisé en ce que** la saillie (22) et l'évidement (26) correspondant sont de forme conique ou comprennent une zone de forme conique.

14. Dispositif de soudage par ultrasons selon l'une des revendications 1 à 13, **caractérisé en ce que** le support (5) comprend un dispositif de serrage qui est mobile en va et vient entre une position ouverte dans laquelle l'unité émettrice d'ultrasons peut être retiré du support (5), et une position fermée dans laquelle le dispositif de serrage entre en contact avec l'unité émettrice d'ultrasons en au moins deux points de soutien et applique un effort à celle-ci, si bien que l'unité émettrice d'ultrasons est soutenue, les point de soutien étant disposés de préférence sur le bourrelet extérieur.
